# EUROPEAN PATENT APPLICATION

(11) **EP 0 692 376 A2**
(43) Date of publication of application: **17.01.1996**
(21) Application number: 95201921.4
(22) Date of filing: 13.07.1995
(51) Int. Cl.: B32B 31/00

(54) **Arrangement capable of favouring plastic-coating to take place correctly on plastic-coating machines with solventless adhesives**

(30) Priority: 15.07.1994 IT MI940514
(71) Applicant: Rossi, Roberto, I-20060 Ornago (Milano) (IT)
(72) Inventor: Rossi, Roberto, I-20060 Ornago (Milano) (IT)
(74) Representative: Fusina, Gerolamo

(57) **Abstract**

An arrangement capable of favouring plastic-coating to take place correctly on plastic-coating machines with solventless adhesives, in which a framework (11) of a plastic-coating machine is provided, to which both:
-- a transparent or metal-coated plastic film (12) on which a layer of solvent less adhesive is coated on an adhesive-coating unit, and
-- a paper substrate (15) constituted by a continuous paper web, or, preferably, partially or slightly overlapping paper sheets
are fed towards a double cylinder coupling calender (13, 14), in which machine, nearby said coupling calender (13, 14) at least one cooling means is provided in order to cool either the film, or the resulting coupled plastic-coated material.

## Description

The present invention relates to an arrangement capable of favouring plastic-coating to take place correctly on plastic-coating machines with solventless adhesives.

In the art of plastic-coating paper, cardboard or similar substrate materials with transparent or metal-coated plastic films, the use of solventless adhesives is gaining popularity. The cause for such a trend is that by using such adhesives the fabricators are better capable of complying with the applicable pollution control regulations, and the coating processes do not constitute any health risks for the operators attending the plastic-coating machines.

The use of said solventless adhesives makes it possible finished plastic-coated materials to be produced which, unfortunately, are affected by some problems. In other terms, on the end plastic-coated product bubbles or blisters may be formed, which reduce the quality thereof. This occurrence can be observed, e.g., in the presence of particular colours of substrate paper or similar substrate means, or in the presence of particular finishing treatments of the surfaces thereof.

The purpose of the instant invention is of addressing the above cited problem, by providing a device, or an arrangement which prevents said phenomenon from arising.

This purpose according to the instant invention is achieved by providing an arrangement capable of favouring plastic-coating to correctly take place on plastic-coating machines with solvent less adhesives, in which a framework of the plastic-coating machine is provided, to which both:
-- a transparent or metal-coated plastic film on which a layer of solvent less adhesive is coated on an adhesive coating unit, and
-- a paper substrate constituted by a continuous paper web, or, preferably, a plurality of partially or slightly overlapping paper sheets
are fed towards a double cylinder coupling calender, characterized in that in said machine, nearby said coupling calender, at least one cooling means is provided in order to cool either the film, or the resulting coupled plastic-coated material.

The characteristics and advantages of an arrangement capable of favouring plastic-coating to take place correctly on plastic-coating machines with solventless adhesives according to the instant invention will become more evident from the following exemplifying, non-limitative disclosure made by referring to the accompanying drawings, in which:
Figure 1 shows a schematic elevation view of a portion of a plastic-coating machine displaying an arrangement according to the present invention, capable of favouring plastic-coating to take place correctly also with solvent less adhesives, with alternative exemplifying embodiments being shown in chain line;
Figure 2 shows a further schematic elevation view of a further arrangement according to the present invention as applied to a plastic-coating machine, at the calender section.

Referring to the accompanying figures, a portion of the generic main structure of a plastic-coating machine is displayed which operates with solventless adhesives and is provided with an arrangement capable of favouring plastic-coating to take place correctly, and which constitutes an embodiment of the instant invention.

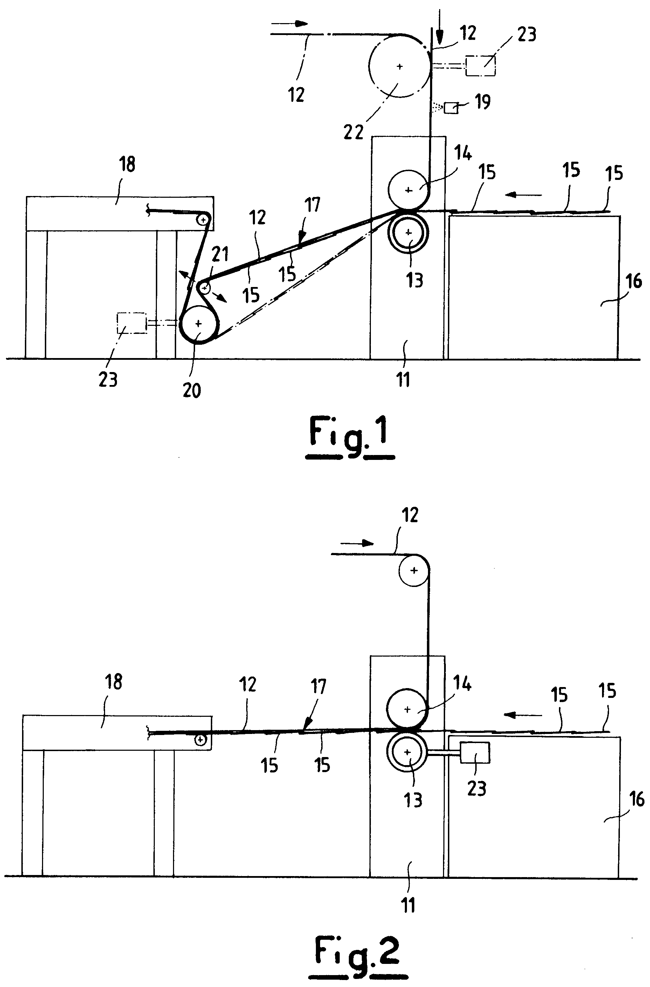

Figure 1 shows a framework (11) of a plastic-coating machine using a transparent or metal-coated plastic film (12) continuously fed from a bobbin and coated with a layer of solventless adhesive by a suitable adhesive coating unit, all of them being not displayed in figures, and known from the prior art.

The film (12) of a suitable plastic material coming from the above said adhesive spreading unit is sent, traveling from up downwards, to a double-cylinder coupling calender (13, 14). A substrate paper component consisting of a continuous web, or, preferably, a plurality of partially and slightly overlapping paper sheets, schematically shown in (15), is also fed by a purposely provided feed table schematically shown in (16), to the nip line of the calender cylinders (13, 14), so as to get coupled with the film (12), after being pressed and treated by said calender unit.

The film (12) and the sheets (15), thus coupled to become a continuous plastic-coated composite product, indicated with (17) downstream from the calender, are then sent to a separation unit (18) which separates once again said, by now plastic-coated, sheets, which are the end product, ready to use. According to an alternative embodiment, the composite plastic-coated web can be wound to become a bobbin of continuous web comprising individual sheets and either transparent or metal-coated plastic film.

According to the present invention upstream from the calender (13, 14) a humidifier means (19) is installed which sprays water onto, and acts on, the surface of the film (12) which will be superimposed to the paper sheets (15) which are fed partially overlapping each other, or to the continuous paper substrate web. Downstream from the calender and upstream from the separation unit a suitably cooled cylinder (20) is installed in order to act on the coupled, plastic-coated product, cooling it.

From the figure, one will observe that a direct feed of the composite product (17) towards said cooled cylinder (20) can be provided, as indicated in chain line. According to an alternative, and preferably, route, a further cylinder (21), which can be either fixed or adjustable in position, can be provided, thus making it possible the angle of winding of the composite product around the cooled cylinder (20) to be varied in order to be able to select the cooling degree to be applied as desired, e.g., according to the thicknesses of the materials which are being processed.

An alternative placement of the arrangement according to the present invention can be provided, as shown in Figure 1.

In fact, upstream from the calender (13, 14), a further cooled cylinder (22) -- rather similar to the preceding one and indicated in chain line -- can be provided in order to act on the film (12), cooling it before said film gets coupled with the paper sheet or continuous web substrate.

Both cylinders (22) and (20) are cooled by a circulating coolant fluid through a coolant circulation loop connected with the cooling unit schematically illustrated in (23).

Said cooling, by acting on the product, stabilizes it favouring the mutual lock and anchoring of the components and terminating any polymerization processes.

Figure 2 shows a further exemplifying embodiment of the arrangement according to the present invention, as applied to a plastic-coating machine.

In this case, either of calender cylinders, e.g., the top cylinder (14), is hollow, and through it a coolant fluid can circulate, and the cylinder is connected with a cooling unit which is at all similar to the one schematically shown in (23), and mentioned above.

It therefore results that, according to the instant invention, it was discovered that, advantageously, by suitably installing cooling means nearby the coupling calender, i.e., upstream from, inside, or downstream from it, the formation of bubbles, blisters and similar faults can be prevented in the end plastic-coated product.

All the above, notwithstanding the solventless adhesive layer is applied at 80-85°C and the operating environment, owing to the surrounding running machines, is rather hot (i.e., the ambient temperature can be as high as 35-45°C).

It is to be noted that an arrangement according to the present invention can also work in a plastic-coating machine utilizing a thermofilm with heat coupling without adhesive. For this purpose, in the calender (13, 14) the upper cylinder (14) will have to be heated in order to obtain a correct coupling between the thermofilm and the paper material or the like.

## Claims

1. Arrangement capable of favouring plastic-coating to take place correctly on plastic-coating machines with solventless adhesives, in which a framework (11) of the plastic-coating machine is provided, to which both:
-- a plastic film (12) on which a layer of solventless adhesive is applied on an adhesive-coating unit, and
-- a paper substrate (15) constituted by a continuous paper web, or, preferably, partially or slightly overlapping paper sheets
are fed towards a double cylinder coupling calender (13, 14), characterized in that in said machine, nearby said coupling calender (13, 14) at least one cooling means is provided in order to cool either the film, or the resulting coupled plastic-coated material.

2. Arrangement according to claim 1, characterized in that at least one cooling cylinder (20) is provided downstream from said calender (13, 14).

3. Arrangement according to claim 2, characterized in that with said at least one cooling cylinder (20) a further cylinder (21) is coupled which can be adjusted in position and is such as to allow the winding angle of said product coming from said calender (13, 14) to be varied.

4. Arrangement according to claim 1, characterized in that at least one cooling cylinder (22) is provided upstream from said calender (13, 14) and acts on said plastic film (12), cooling it

5. Arrangement according to any of claims 1-3, characterized in that upstream from said calender (13, 14) a humidifier means (19) is installed in order to act on said plastic film (12).

6. Arrangement according to claim 1, characterized in that at least one cylinder of said calender (13, 14) is cooled.

7. Arrangement according to any of the preceding claims, characterized in that said cylinders (20, 22) or cylinders (13 or 14) are connected with a cooling unit (23).

8. Arrangement capable of favouring plastic-coating to take place correctly on plastic-coating machines with thermofilm, in which a framework (11) of the plastic-coating machine is provided, to which both a plastic film (12), a thermofilm, and a paper substrate (15)constituted by a continuous paper web, or, preferably, partially or slightly overlapping paper sheets are fed towards a double cylinder coupling calender (13, 14), one of which (14) is heated, characterized in that in said machine, nearby said coupling calender (13, 14) at least one cooling means is provided in order to cool either the film, or the resulting coupled plastic-coated material.
